# EUROPEAN PATENT APPLICATION

(11) **EP 3 002 123 A1**
(43) Date of publication of application: **06.04.2016**
(21) Application number: 15188226.3
(22) Date of filing: 02.10.2015
(51) Int. Cl.: B33Y 30/00, B29C 67/00

(54) **APPARATUS AND METHOD FOR ROTARY THREE-DIMENSIONAL PRINTING**

(30) Priority: 03.10.2014 US 201462059396 P; 30.09.2015 US 201514870451
(71) Applicant: Tyco Electronics Corporation, Berwyn, PA 19312 (US)
(72) Inventor: Fry, Charles David, New Bloomfield, PA Pennsylvania 17068 (US); Hudson, Richard Earl, Elizabethtown, PA Pennsylvania 17022 (US)
(74) Representative: Johnstone, Douglas Ian

(57) **Abstract**

An apparatus (10) and method are provided for fabricating a three-dimensional object. The apparatus (10) includes a build rod (12) for receiving successive layers of a build material therein. The apparatus (10) also includes a drive mechanism (13) to rotate the build rod (12) and a print head (30) disposed above the build rod (12). The print head (30) is configured for dispensing a material onto the build rod (12) to form a three-dimensional object.

## Description

The present invention is directed to an apparatus and method which produces objects using a rotary motion. In particular, it would be beneficial to produce an object or part using a solid rod held in a rotary chuck, thereby eliminating the need for a build plate and the bonding and release process associated therewith.

It is common in plastic parts manufacturing to produce large batch sizes and serial parts by injection molding or extrusion. The advantage of plastic injection molding is, in particular, owing to the highly accurate production of complex part geometries, whereby the functionality of the injection molding process optimally satisfies the requirements for the cost-effective and economical production of plastic parts.

However, the need for individual units and small batch sizes of plastic parts, with or without the requirement of being supplied within a short time frame and with properties similar to those of injection molding parts, is continuing to grow. Manufacturing processes exist for the production of such parts which are widely known under the term "prototyping." The production of such parts is generally based on the generation of the geometry from 3D data. These geometries are produced in a variety of forms by using the corresponding material, such as meltable layers of powder by heat input, e.g. with lasers, by generative systems such as printing processes, in various combinations of powder parts and using the "melt strand" process.

Various three-dimensional printing devices are currently available to produce parts from such 3D data. Three-dimensional (3D) printing refers to processes that create 3D objects based on digital 3D object models and a materials dispenser. In 3D printing, a dispenser moves in at least 2-dimensions and dispenses material in accordance to a determined print pattern. To a build a 3D object, a platform that holds the object being printed is adjusted such that the dispenser is able to apply many layers of material. In other words, a 3D object may be printed by printing many layers of material, one layer at a time. If the dispenser moves in 3-dimensions, movement of the platform is not needed. 3D printing features such as speed, accuracy, color options and cost vary for different dispensing mechanisms and materials.

One such device or apparatus is shown in EP 1 886 793 A1, which shows a plasticizing unit common to the injection molding technique coupled to a material reservoir that can be placed under pressure for the liquid phase of a material. For the production of an object on a slide in a construction space, this material is being discharged via a discharge orifice in the shape of drops whereby, owing to the adhesive forces of the material, high pressure and generally high temperatures must also be applied. The apparatus inlcudes means for the object carrier to move in the x, y and z directions relative to the discharge unit.

Other devices and methods directed to polymer materials which are printed based on the principles of ink jet printing are disclosed in various patents, such as U.S. Pat. Nos. 6,850,334 B1 and 6,658,314 B1. In addition many patent and patent applications have published which relate to the design of the associated print heads and the elimination of problems arising in the process (e.g. U.S. Pat. No. 6,259,962 B1, WO 00/52624 A1, WO 00/76772 A1, WO 01/26023 A1, WO 01/53105 A2, WO 2004/044816 A1, WO 2004/050323 A1, WO 2004/096514 A2, WO 2004/096527 A2, WO 2005/053928 A2, EP 1 637 307 A2 or DE 199 31 112 A1).

However, known system and methods of three-dimensional printing all use a stage or a platform on which the part or object is built. Once built, the stage or platform is removed. These systems are typically Cartesian systems (i.e. XYZ based).

It would be beneficial to provide a system and method which produces objects using a rotary motion which replaces the Y motion of the Cartesian system. In particular, it would be beneficial to produce an object or part using a solid rod held in a rotary chuck, thereby eliminating the need for a build plate and the bonding and release process associated therewith.

The solution is provided by an apparatus and method which produces objects using a rotary motion as disclosed herein. According to one aspect of the present invention there is provided an apparatus as claimed in claim 1. According to another aspect of the present invention there is provided a method as claimed in claim 10. The apparatus and method allow for objects which are, but not limited to, round, circular, arcuate or cylindrical in shape to be made with better resolution than can be accomplished with a convention build plate and print head which move in the X-Y-Z directions. The apparatus and method also allow custom threading, keying and other such details to be fabricated on such objects.

The invention will now be described by way of example with reference to the accompanying drawings in which:
FIG. 1 is a front perspective schematic view of an illustrative three dimensional printing apparatus according to the present invention;
FIG. 2 is a bottom perspective schematic view of the printing apparatus of FIG. 1;
FIG. 3 is a front schematic view of an illustrative build material delivery system for use with the printing apparatus of FIG. 1;
FIG. 4 is a front schematic view of the printing apparatus of FIG. 4 with material deposited on the build rod to form an object; and
FIG. 5 is a front schematic view of the printing apparatus of FIG. 4 with the printing of the object complete and a portion of the building rod severed by the cutting blade.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the preferred embodiments. Accordingly, the invention expressly should not be limited to such preferred embodiments illustrating some possible non-limiting combination of features that may exist alone or in other combinations of features, the scope of the invention being defined by the claims appended hereto.

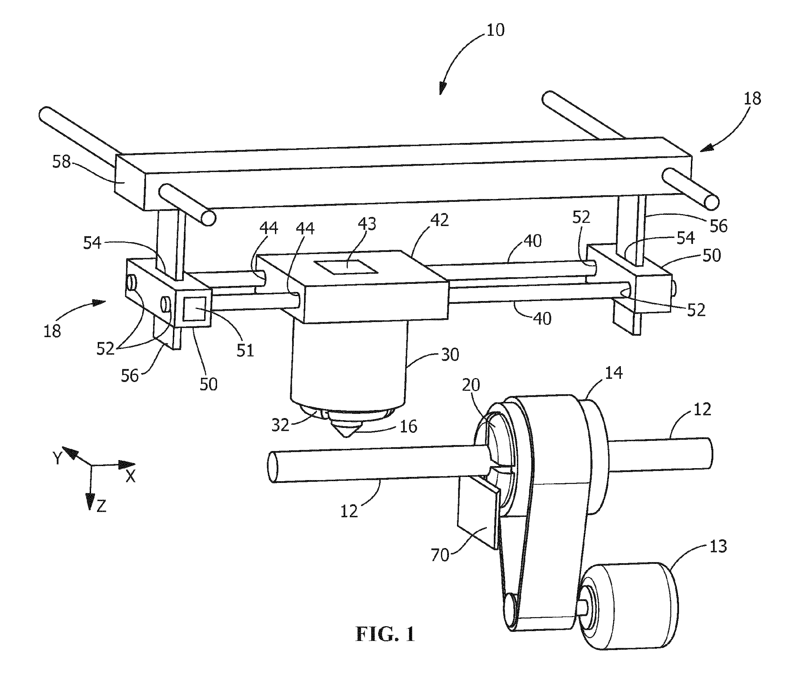

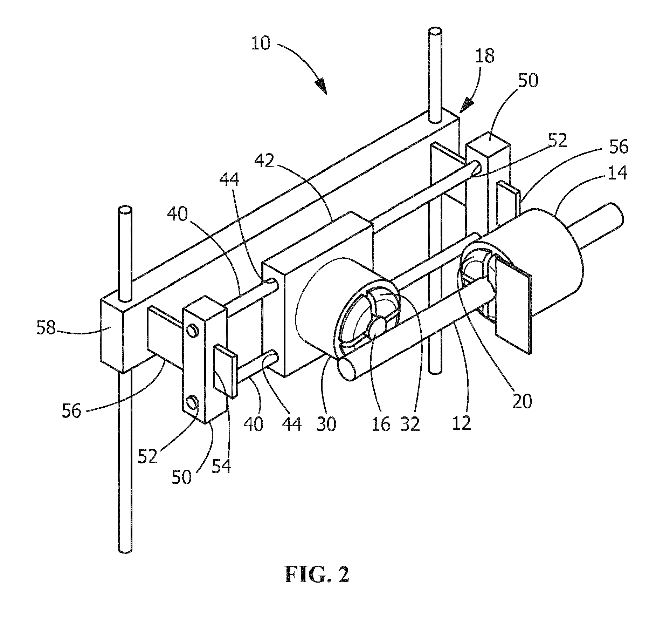

FIGS. 1-5 illustrate an apparatus 10 for three-dimensional printing of round or cylindrical parts. The apparatus 10 produces or fabricates three-dimensional objects by depositing layers of a build material on a build rod that ultimately forms the three-dimensional round, arcuate or cylindrical object. The apparatus 10 includes a rotary build rod 12, a structural or securing device 14 for holding the build rod 12, a build material dispenser assembly or print head 16 and an assembly 18 for moving the print head 16 in the X and Z directions (as shown in FIG. 1).

The build rod 12 is generally cylindrical in shape and forms a center shaft on which the build material is deposited by the print head 16. The build rod 12 can be made from various materials which are capable of receiving the build material thereon. In various illustrative embodiments, the build rod 12 may be made of the same material which is used to fabricate or create the object. In such application, the concerns regarding the release process of the object from the build rod 12 is eliminated as the build rod 12 becomes part of the final object, as will be more fully described.

The build rod 12 is maintained in position by a structural device 14. The structural device 14 may comprise a rotary chuck. In the embodiment shown, the structural device is a rotary chuck with a collet 20 which can be tightened to engage the build rod 12, thereby securing the build rod in proper position relative to the print head 16. The collet 20 of the structural device 14 may also be loosened to allow the building rod 12 to move in a direction parallel to the longitudinal axis of the structural device 14 and the build rod 12. Although a collet 20 is shown and described, other devices may be used to properly secure the build rod 12 in position.

In use, the build rod 12 is a shaft on which the build material is deposited to create the desired object. In one illustrative embodiment, the build rod 12 may be positioned substantially parallel to the movement of the print head 16 in the X direction. In another embodiment, depending upon the object to be created, the build rod 12 may be angled with respect to the movement of the print head 16 in the X direction.

The structural device 14 which holds the build rod 12 may be mounted on a drive mechanism 13 or rotary actuator that rotates the structural device 14 and the build rod 12 about the longitudinal axis of the structural device 14 and the build rod 12. The rotation may occur in either a clockwise or counterclockwise direction. The rotary actuator could be hydraulically, pneumatically or electrically driven. The rotary actuator may include gears and belts for driving the structural device 14. In addition, the rotary actuator may include one or more encoders, or similar devices, that cooperate with a controller to monitor and adjust the speed and/or position of the structural device 14 and the build rod 12. The same encoders can also be used to control the firing of the print head 16, such that the print head 16 prints accurately and repeatedly, regardless of variations in the rotational speed of the build rod 12.

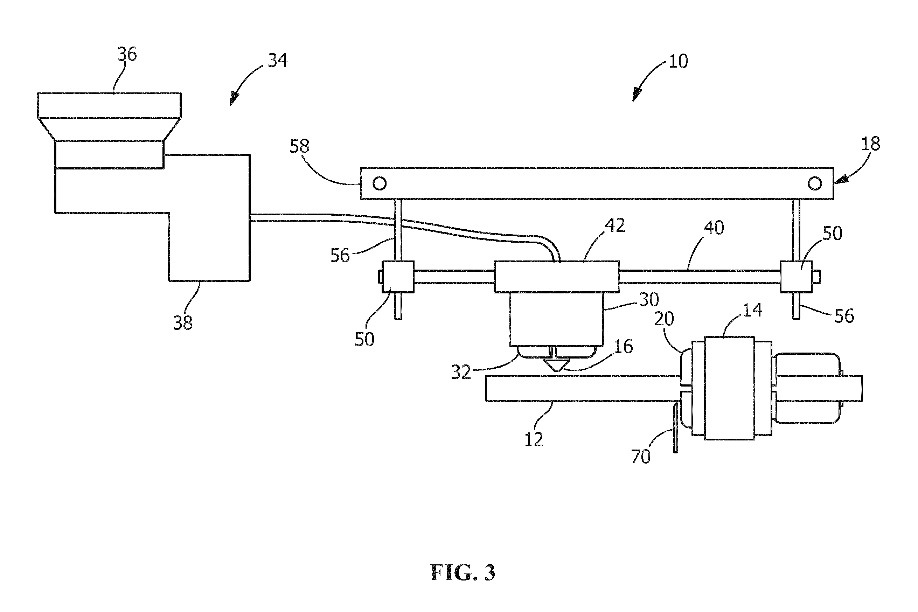

The build rod 12 receives build material from the print head 16 that is located adjacent to the build rod 12. In particular, the print head 16 is mounted above the build rod 12 and dispenses build material onto the build rod 12 as the build rod 12 rotates. In one illustrative embodiment, the print head 16 includes a volumetric adjuster for manually or automatically adjusting the amount of material being deposited. The print head 16 is supported on the assembly 18. In one embodiment, the print head 16 may be supplied by a larger system located remotely from the apparatus 10 (FIG. 3). However, other print heads 16 and systems may be used without departing from the scope of the invention.

The assembly 18 includes a print head receiving member 30 which, in the illustrative embodiment shown, is a chuck with a collet 32 which can be tightened to engage the print head 16, thereby securing the print head 16 in proper position relative to the assembly 18. Although a collet 32 is shown and described, other devices may be used to properly secure the print head 16 in position.

Material is supplied the print head 16 by an apparatus 34, such as that illustrated in FIG. 3. In the illustrative embodiment, the apparatus 34 includes a hopper 36 and a plasticizer 38. However, other types of apparatus can be used without departing from the scope of the invention. In general, apparatus 34 is configured to allow a wide range of materials to be used to produce a three-dimensional object, such as, but not limited to polymers, which may include, but are not limited to, filled polymers in the form of pellets or other ground forms. The materials can also include regrind. Any number of other materials can be used.

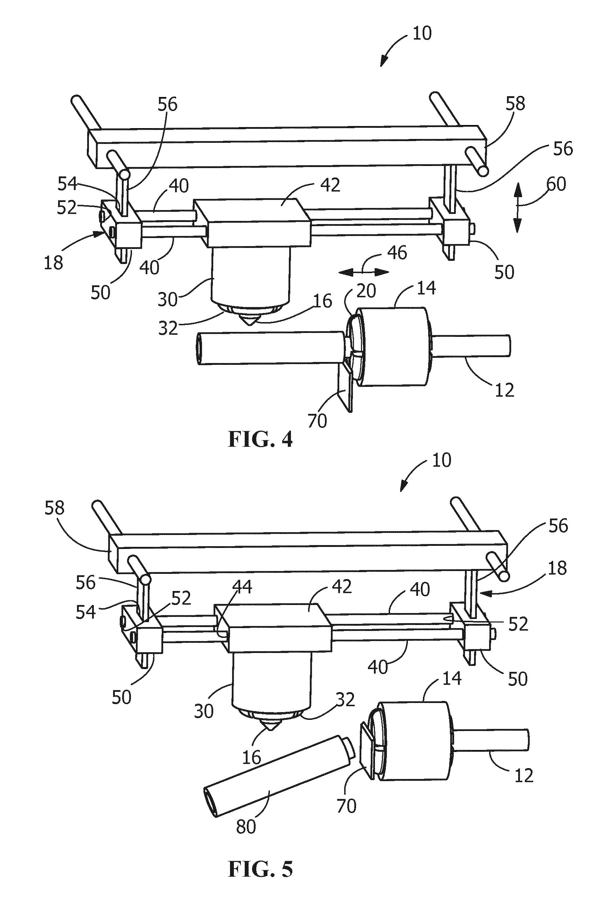

Assembly 18 includes mounting rods 40 on which a mounting member 42 is moveably attached. The mounting member 42 includes the print head receiving member 30 which holds the print head 16 in position. The mounting member 42 has openings 44 which extend therethrough and are dimensioned to receive the mounting rods 40 therein. A motor or drive mechanism 43 cooperates with the mounting member 42 to allow the mounting member 42, the print head receiving member 30 and the print head 16 to be moved in the X direction, which in the illustrative embodiment shown is parallel to the longitudinal axis of the build rod 12, as indicated by arrow 46 (FIG. 4), relative to the mounting rods 40. As the print head receiving member 30 and the print head 16 are mounted on the mounting member 42, the movement of the mounting member 42 causes the print head receiving member 30 and the print head 16 to move accordingly.

The mounting member 42 could be hydraulically, pneumatically or electrically driven and may include gears and belts for driving the mounting member 42. In addition, the mounting member 42 may include one or more encoders, or similar devices, that cooperate with a controller to monitor and adjust the speed and/or position of the mounting member 42. As previously stated, the same encoders can also be used to control the firing of the print head 16 and the movement of the build rod 12.

Proximate the ends of the mounting rods 40 are connection members 50. The connection members 50 have openings 52 for receipt of the mounting rods 40 therein. In the illustrative embodiment shown, the mounting rods 40 are secured in the connection members 50, preventing the mounting rods 40 from moving in the direction of arrow 46 (FIG. 4). However, other configurations which allow the mounting rods 40 to move relative to the connection members 50 can be used without departing from the scope of the invention.

The connection members 50 have slot or openings 54 which receive rails 56 therein. The rails 56 are attached to a frame member 58. The rails 56 extend in a direction which is essentially perpendicular to the direction of the mounting rods 40. A motor or drive mechanism 51 (FIG. 1) cooperates with the connection members 50 to allow the connection members 50 to be moved in the Z direction, which in the illustrative embodiment shown is perpendicular to the longitudinal axis of the build rod 12 or away from the build rod 12, as indicated by arrow 60 (FIG. 4). As the mounting rods 40, the mounting member 42, the print head receiving member 30 and the print head 16 are mounted on the connection members 50, the movement of the connection members 50 causes the print head receiving member 30 and the print head 16 to move accordingly.

The connection members 50 could be hydraulically, pneumatically or electrically driven and may include gears and belts for driving the connection members 50. In addition, the connection members 50 may include one or more encoders, or similar devices, that cooperate with a controller to monitor and adjust the speed and/or position of the mounting member 42. As previously stated, the same encoders can also be used to control the firing of the print head 16 and the movement of the build rod 12.

Alternatively, the structural device 14 may be movably connected to a rail (not shown) or the like. In this embodiment, a motor or drive mechanism would cooperate with the structural device 14 to allow the structural device 14 to be moved in the Z direction, which in the illustrative embodiment shown is perpendicular to the longitudinal axis of the build rod 12 or away from the print head 16, as indicated by arrow 60 (FIG. 4). As the build rod 12 is secured in the structural device 14, the movement of the structural device 14 would cause the build rod 12 to move accordingly.

In operation, the build rod 12 is fed through the structural device 14 to the appropriate length required for the desired object to be built. The build rod 12 is then secured in place to maintain the build rod 12 is position relative to the structural device, as shown in FIGS. 1-3.

With the build rod properly positioned the printing process may be engaged. The print head 16 releases material which is received from the apparatus 34. The material released from the print head 16 is deposited onto the build rod 12. In the embodiment shown, the material is released in the form of a stream of material. As the build rod 12 is made from material which is compatible with the build material thereon, the build material bonds to the build rod 12, as is known in the industry.

Once the material is released, the mounting member 42 and print head 16 are moved in the direction of arrow 46 to deposit the material along the desired length of the build rod 12. This process is repeated as required. Once material has been deposited along the desired length, the build rod is rotated to allow the next row to be deposited. Once the entire circumference of the build rod 12 has material deposited, a second layer of material is deposited in the same manner. This is continued until the desired object has been formed, as shown in FIG. 4.

Alternatively, the build rod 12 may be rotated prior to the movement of the print head 16 in the direction of arrow 46. In this method, the material would be deposited along the entire circumference of the build rod 12 prior to the print head 16 moving.

Once a layer is complete, the print head 16 is moved in the direction of arrow 60 to provide sufficient space for the next successive layer. Alternatively, the build rod 12 may be moved in the direction of arrow 60 to provide sufficient space for the next successive layer.

Once the object 80 is complete, a cutting mechanism or blade 70 is moved toward the assembly 18 to sever the build rod 12 with the completed object from the remainder of the build rod 12. The completed object is then removed from the apparatus 10.

As previously stated, in application in which the build rod 12 is made of the same material which is used to create the object, the build rod 12 becomes part of the final object and does not need to be removed. In addition, if the construction of the final object does not require the removal of the build rod 12, the build rod 12 does not need to be removed. In such application, the concerns regarding the release process of the object from the build rod 12 is eliminated, as the build rod 12 becomes part of the final object.

In another illustrative embodiment, the build rod 12 is a pre-molded or pre-built piece. In such instances, the material is deposited on the build rod 12 add features, such as, but not limited to keying or threading.

The size and exact configuration of the apparatus 10 can vary to suit a particular application. For example, the apparatus 10 could be sized to fit on a tabletop to produce relatively small three-dimensional objects, or the apparatus 10 could have a substantial footprint for producing relatively large three-dimensional objects. In a particular embodiment, the size, including the diameter and/or the width of the build rod 12 can vary to suit a particular application. Additionally, depending upon the size of the build rod 12, the apparatus 10 may include multiple print heads 16.

The apparatus and process described herein allows for objects which are, but not limited to, round, circular, arcuate or cylindrical in shape to be made with better resolution than can be accomplished with a convention build plate and print head which move in the X-Y-Z directions. Additionally, the apparatus and process can be used to fabricate custom threading, keying and other such details on such objects.

While the invention has been described with reference to a preferred embodiment, it will be understood by those skilled in the art that various changes may be made and equivalents may be substituted for elements thereof without departing from the scope of the invention as defined in the accompanying claims. In particular, it will be clear to those skilled in the art that the present invention may be embodied in other specific forms, structures, arrangements, proportions, sizes, and with other elements, materials, and components, without departing from the scope of the claims. One skilled in the art will appreciate that the invention may be used with many modifications of structure, arrangement, proportions, sizes, materials, and components and otherwise, used in the practice of the invention, which are particularly adapted to specific environments and operative requirements without departing from the scope of the claims. The presently disclosed embodiments are therefore to be considered in all respects as illustrative and not restrictive, the scope of the invention being defined by the appended claims, and not limited to the foregoing description or embodiments.

## Claims

1. An apparatus (10) for fabricating a three-dimensional object, the apparatus (10) comprising:
a build rod (12) for receiving successive layers of a build material therein;
a drive mechanism (13) to rotate the build rod (12); and
a print head (16) disposed adjacent the build rod (12), wherein the print head (16) is configured for dispensing material onto the build rod (12) to form a three-dimensional object.

2. The apparatus (10) as recited in claim 1, wherein the build rod (12) is maintained in position by a rotary chuck (20).

3. The apparatus (10) as recited in claim 1 or 2, wherein the build rod (12) is made of the same material which is used to fabricate the three-dimensional object.

4. The apparatus (10) as recited in claim 1, 2 or 3, wherein the print head (16) is mounted to an assembly (18) which allows the print head (16) to move in a direction parallel to a longitudinal axis of the build rod (12).

5. The apparatus (10) as recited in claim 1, 2 or 3, wherein the print head (16) is mounted to an assembly (18) which allows the print head (16) to move in a direction away from the build rod (12).

6. The apparatus (10) as recited in any one of claims 1 to 4, wherein the build rod (12) is secured to a securing device (14) which is movable in a direction away from the print head (16).

7. The apparatus (10) as recited in any preceding claim, wherein a cutting member (70) is provided to sever the building rod (12) after the three-dimensional object (80) has been fabricated.

8. The apparatus (10) as recited in any preceding claim, wherein the print head (16) is disposed above the build rod (12).

9. The apparatus (10) as recited in claim 8, wherein the print head (16) dispenses droplets onto the build rod (12).

10. A method of producing a three-dimensional object, the method comprising:
deposing material from a print head (16) onto a build rod (12); and
rotating the build rod (12) to create the three-dimensional object.

11. The method as recited in claim 10, wherein the build rod (12) is made of the same material which is used to fabricate the three-dimensional object.

12. The method as recited in claim 10 or 11, further comprising moving the print head (16) in a direction parallel to a longitudinal axis of the build rod (12).

13. The method as recited in claim 10, 11 or 12, further comprising moving the print head (16) in a direction away from the build rod (12).

14. The method as recited in claim 10, 11 or 12, further comprising moving the build rod (12) in a direction away from the print head (16).

15. The method as recited in any one of claims 10 to 14, further comprising severing the building rod (12) after the three-dimensional object (80) has been fabricated.
